(19) Europäisches Patentamt
European Patent Office
Office européen des brevets

(11) **EP 4 229 662 B1**

(12) **EUROPEAN PATENT SPECIFICATION**

(45) Date of publication and mention
of the grant of the patent:
**20.05.2026 Bulletin 2026/21**

(21) Application number: **21790493.7**

(22) Date of filing: **13.10.2021**

(51) International Patent Classification (IPC):
*H01F 1/11* *(2006.01)*     *H01F 41/02* *(2006.01)*

(52) Cooperative Patent Classification (CPC):
**H01F 1/11; H01F 41/0266**

(86) International application number:
**PCT/EP2021/078254**

(87) International publication number:
**WO 2022/079074 (21.04.2022 Gazette 2022/16)**

(54) **ENHANCED MAGNETIC PROPERTIES THROUGH ALIGNMENT OF NON-MAGNETIC CONSTITUENTS**

ERWEITERTE MAGNETISCHE EIGENSCHAFTEN DURCH AUSRICHTUNG NICHTMAGNETISCHER BESTANDTEILE

PROPRIÉTÉS MAGNÉTIQUES AMÉLIORÉES PAR L'ALIGNEMENT DE CONSTITUANTS NON MAGNÉTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2020 EP 20201547**

(43) Date of publication of application:
**23.08.2023 Bulletin 2023/34**

(73) Proprietor: **Aarhus Universitet**
**8000 Aarhus C (DK)**

(72) Inventors:
• **CHRISTENSEN, Mogens**
**8240 Risskov (DK)**
• **PILLAI, Harikrishnan, Vijayan**
**8200 Århus N (DK)**

(74) Representative: **Høiberg P/S**
**Adelgade 12**
**1304 Copenhagen K (DK)**

(56) References cited:
**EP-A1- 0 039 773     US-A1- 2009 196 820**

• **SAURA-MÚZQUIZ MATILDE ET AL: "Elucidating the relationship between nanoparticle morphology, nuclear/magnetic texture and magnetic performance of sintered SrFe 12 O 19 magnets", vol. 12, no. 17, 22 April 2020 (2020-04-22), United Kingdom, pages 9481 - 9494, XP055790186, ISSN: 2040-3364, Retrieved from the Internet <URL:https://pubs.rsc.org/en/content/articlepdf/2020/nr/d0nr01728k> DOI: 10.1039/D0NR01728K**

**EP 4 229 662 B1**

**Description**

**Summary**

The invention is defined by the claims. Any subject matter falling outside the scope of the claims is provided for information purposes only.

The present invention relates to a way of making permanent magnets free of rare-earth metals. Specifically the type of magnets produced by the present invention are rare-earth free magnets based on iron. More specifically, the magnets of the present invention are of the class hexaferrites.

Saura-Múzquiz, M. et al: "Elucidating the relationship between nanoparticle morphology, nuclear/magnetic texture and magnetic performance of sintered SrFe12O10 magnets", Nanoscale, 2020, DOI: 10.1039/D0NR01728K is a research paper investigating morphologies and magnetic properties of various M-type SrFe12O19 nanoparticles as a function of synthesis route, including hydrothermal and sol-gel routes.

EP 0039773 A1 is a patent application disclosing various synthesis protocols for production of barium ferrite series powders, including BaFe12O19 by hydrothermal synthesis and calcination.

US 2009/196820 A1 is a patent application disclosing processes for producing anisotropic magnetic materials comprising preparing a feebly magnetic material and transforming into a magnetic material by imparting an external field to the material in order to transform it into a magnetic substance.

The inventors have discovered a new synthesis route, which allows for the manufacture of an iron-based non-ferromagnetic precursor, which can be converted into hexaferrite permanent magnets. The thus formed non-ferromagnetic precursor, which comprises a large fraction of crystallites having a platelet or needle morphology, can be transformed into a permanent magnet, either in a one-step process by way of spark plasma sintering (SPS) or in a two-step process by first compacting a crystalline powder into a pellet, and subsequently calcination. Taking advantage of the anisotropic shape of the precursor, the inventors demonstrate that it is possible to align the precursor and obtain a crystallographic preferred orientation, which facilitates alignment of the crystallites constituting the hexaferrite permanent magnet and allows alignment of the individual atomic magnetic dipole moments upon formation of the hexaferrite permanent magnet.

Equally important to the anisotropic morphology is also the non-ferromagnetic nature of the precursor. Since the precursor is non-ferromagnetic the magnetic domain short-circuiting is eliminated during the compaction step of the hexaferrite permanent magnet, which would otherwise require heating above the Curie temperature of the precursor, or alternatively application of large magnetic fields to break the ferromagnetic interaction. Both of these processes are undesirable in terms of industrial scale-up, and so it is beneficial to eliminate these.

Consequently, by utilizing the non-ferromagnetic anisotropic precursor of the present invention, it is possible to produce rare-earth free magnets with improved magnetic properties compared to commercially available equivalents in an industrially relevant scale. Additionally, the non-ferromagnetic anisotropic precursor employs significantly fewer process steps compared to conventional synthesis of rare-earth free magnets.

**Detailed disclosure**

The invention is defined by the claims. Any subject matter falling outside the scope of the claims is provided for information purposes only

On embodiment of the present disclosure relates to a non-ferromagnetic precursor with a concentration of more than 15% by weight of anisotropic crystalline materials of the group consisting of six-line ferrihydrite (SLF), $\alpha$-Fe$_2$O$_3$, and/or $\alpha$-FeOOH, each with an average aspect ratio $A/C \geq 2$, a size $C$ ranging from 2 - 200 nm, and a size $A$ ranging from 4 - 2000 nm.

*Non-ferromagnetic:* By this is understood a chemical entity having unpaired electrons, and where no permanent magnetism is observed (i.e., the magnetization is approximately zero under zero applied external field) within the temperature range relevant for the present disclosure, preferably at room temperature. The phrases "non-ferromagnetic", and "non-magnetic" may be used interchangeably herein.

*Precursor:* By this is understood a chemical entity which has the potential of being transformed by technical manipulation into an envisioned product, in this case an iron-containing precursor is transformed into the envisioned product which is a hexaferrite permanent magnet. The phrases "non-ferromagnetic precursor", "non-magnetic precursor", and "precursor" may be used interchangeably herein.

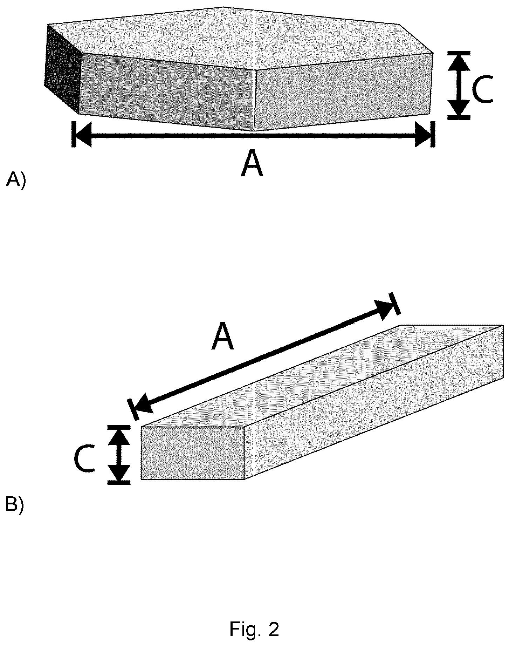

*Aspect ratio:* By this is understood the ratio between the length ($A$ direction) of a crystal of the precursor and the height ($C$ direction) of the same crystal (see also Figures 2a and 2b). This difference between $A$ and $C$ is what gives the precursor its unique properties in terms of facilitating alignment of the crystallites in the final magnet.

*Anisotropic crystallite:* By this is understood that the crystallites are not spherical, i.e., the crystallites are rather platelet, plate-like shaped, needle or needle-like shaped so that when compressed, a substantial fraction of the crystallites, such as all the crystallites will align in the same direction due to the difference in aspect ratio (see also Aspect ratio above).

The crystallite aspect ratio of the precursor material as disclosed herein is defined by A/C, and should in one embodiment of the present disclosure be larger than 2. The aspect ratio is crucial to the present disclosure, which relies on the preferred orientation of precursors in the synthesis of hexaferrite permanent magnets, preferably strontium hexaferrite permanent magnets.

In one embodiment of the present disclosure the non-magnetic precursor has an average aspect ratio defined by $A/C \geq 2$, such as $A/C \geq 5$, such as $A/C \geq 10$, such as $A/C \geq 25$, such as $A/C \geq 50$, such as $A/C \geq 100$, such as $A/C \geq 1000$.

In one embodiment of the present disclosure, the non-magnetic precursor comprises crystallites having a platelet, or platelet-like morphology.

In one embodiment of the present disclosure, the non-magnetic precursor comprises crystallites having a needle, or needle-like morphology.

Much like a deck of playing cards, when dropped on the floor, most of the cards will lay flat on top of each other, while only very few can be expected to land on their narrow side. Likewise for needles if needles are dropped to the floor the long part of the needle will lay flat parallel with the floor, it is very unlikely that the needle will be standing up vertically.

The larger the crystallite aspect ratio of the precursor of the present disclosure (see Figures 2a and 2b), the higher is the probability for the crystallites to stack in a preferred orientation, which in turn facilitates improved magnetic properties.

In one embodiment of the present disclosure, the average aspect ratio $A/C \geq 2$.

In one embodiment of the present disclosure, the average aspect ratio $A/C \geq 5$.

In one embodiment of the present disclosure, the average aspect ratio $A/C \geq 10$.

In one embodiment of the present disclosure, the average aspect ratio $A/C \geq 25$.

In one embodiment of the present disclosure, the average aspect ratio $A/C \geq 50$.

In one embodiment of the present disclosure, the average aspect ratio $A/C \geq 100$.

In one embodiment of the present disclosure, the average aspect ratio $A/C \geq 1000$.

In one embodiment of the present disclosure, C is ranging from 2 - 200 nm, such as from 200 - 170 nm, such as from 170 - 140 nm, such as from 140 - 110 nm, such as from 110 - 80 nm, such as from 80 - 50 nm, such as from 50 - 30 nm, such as from 30 - 20 nm, such as from 20 - 15 nm, such as from 15 - 10 nm, such as from 10 - 2 nm.

In one embodiment of the present disclosure, A is ranging from 4 - 2000 nm, such as from 2000 - 1500 nm, such as from 1500 - 1000 nm, such as from 1000 - 500 nm, such as from 500 - 250 nm, such as from 250 - 125 nm, such as from 125 - 50 nm, such as from 50 - 40 nm, such as from 40 - 30 nm, such as from 30 - 20 nm, such as from 20 - 10 nm, such as from 10 - 4 nm.

In one embodiment of the present disclosure, the precursor has a concentration of anisotropic crystalline materials making up 100 % by weight, such as 95 - 85 wt%, such as 85 - 75 wt%, such as 75 - 65 wt%, such as 65 - 55 wt%, such as 55 - 45 wt%, such as 45 - 35 wt%, such as 35 - 25 wt%, such as 25 - 15 wt%.

The precursors of the present disclosure are prepared under autogenous reaction conditions at a maximum temperature of 200°C as exemplified in Example 1. By this approach, a composition is produced which has an amount of platelet shaped six-line ferrihydrite (SLF) crystallites of at least 15 wt%. The minimum percentage of 15 wt% is obtained when conducting the reaction at the lowest temperature of 100°C, while the amount increases upon elevating the temperature. At 150°C the amount is 38 wt% and at 200°C it has decreased to 30 wt%. It is thus possible to tune the amount of SLF by controlling the temperature of the reaction. It is also envisioned that for a fixed temperature, control of the reaction time could be used to tune the amount of SLF in the final composition. The same arguments hold for a composition comprising anisotropic Hematite or Goethite.

One embodiment of the present disclosure is a method of producing a non-ferromagnetic precursor, comprising the steps of:

    a. mixing salts of $Fe^{3+}$ with a strong alkaline solution to form a gel,
    b. transferring said gel to an autoclave, and sealing said autoclave,
    c. placing said autoclave at a temperature ranging from 200 - 150°C, such as from 150 - 100°C, such as 100°C for more than 1h, such as 1-2 hours, such as 2-4 hours, such as 4-8 hours, such as 8-24 hours, under autogenous pressure, and
    d. isolating the formed anisotropic crystalline non-magnetic precursor material.

One embodiment of the present disclosure is the method as defined above, wherein the alkaline solution is made by dissolving NaOH or KOH in water.

One embodiment of the present disclosure is the method as defined above, wherein the reaction temperature is 200°C.

One embodiment of the present disclosure is the method as defined above, wherein the reaction temperature is 150°C

One embodiment of the present disclosure is the method as defined above, wherein the reaction temperature is 100°C.

One embodiment of the present disclosure is the method as defined above, wherein the reaction time is 1 hour.

One embodiment of the present disclosure is the method as defined above, wherein the reaction time is 1-2 hours.

One embodiment of the present disclosure is the method as defined above, wherein the reaction time is 2-4 hours.

One embodiment of the present disclosure is the method as defined above, wherein the reaction time is 4-8 hours.

One embodiment of the present disclosure is the method as defined above, wherein the reaction time is 8-24 hours.

A further embodiment of the present disclosure is the method as defined above, wherein a source of divalent metal ion such as Calcium (Ca), Strontium (Sr), Barium (Ba) Magnesium (Mg), Manganese (Mn), Iron (Fe), Cobalt (Co), Nickel (Ni), Copper (Cu), Zinc (Zn), and trivalent Lanthanum (La) may optionally be added during step a.

In one embodiment of the present disclosure, the anisotropic crystalline material of the precursor is six-line ferrihydrite (SLF).

In one embodiment of the present disclosure, the anisotropic crystalline material of the precursor is Hematite ($\alpha$-$Fe_2O_3$).

In one embodiment of the present disclosure, the anisotropic crystalline material of the precursor is Goethite ($\alpha$-FeOOH).

In a further embodiment of the present disclosure, the precursor further comprises one or more sources of metals such as Calcium (Ca), Strontium (Sr), Barium (Ba) Magnesium (Mg), Manganese (Mn), Iron (Fe), Cobalt (Co), Nickel (Ni), Copper (Cu), Zinc (Zn), and Lanthanum (La).

The precursors obtained in Example 1 may be converted into hexaferrite permanent magnets either in a one-step process by way of spark plasma sintering (SPS) as in Example 4, or in a two-step process by first compacting into a powder, and subsequently calcination as in Example 5. Either way, the result is a structurally highly aligned permanent magnet evidenced by the X-ray diffraction patterns and associated Rietveld analysis found in Examples 3 and 4.

One embodiment of the present disclosure relates to the non-magnetic precursor for use in formation of a strontium hexaferrite permanent magnet.

One embodiment of the present disclosure is a method of producing a strontium hexaferrite permanent magnet comprising the steps of:

a. providing a non-ferromagnetic precursor as defined herein,
b. compacting said precursor at a temperature between 700 - 1000°C by spark plasma sintering (SPS) in the absence of any applied magnetic field, thereby inducing a phase change, and
c. isolating the thus formed strontium hexaferrite permanent magnet.

Another embodiment of the present disclosure is a method of producing a strontium hexaferrite permanent magnet comprising the steps of:

a. providing a non-ferromagnetic precursor as defined herein,
b. compacting said precursor by the application of pressure,
c. calcining said compacted precursor at a temperature between 700 - 1220°C in the absence of any applied magnetic field, thereby inducing a phase change, and
d. isolating the thus formed strontium hexaferrite permanent magnet.

One embodiment of the present disclosure is the method of producing a strontium hexaferrite permanent magnet as defined herein, wherein the anisotropic crystalline material of said precursor is largely $\alpha$-$Fe_2O_3$.

One embodiment of the present disclosure is the method of producing a strontium hexaferrite permanent magnet as defined herein, wherein the anisotropic crystalline material of said precursor is largely six-line ferrihydrite (SLF).

One embodiment of the present disclosure is the method of producing a strontium hexaferrite permanent magnet as defined herein, wherein the anisotropic crystalline material of said precursor is largely $\alpha$-FeOOH.

X-ray powder diffraction is a technique which is highly sensitive to the crystal structure and the spatial orientation of crystallites in a sample.

The analysis of a powder diffractogram obtained from X-ray powder diffraction is based on the Braggs law of diffraction, which is given by the following relation:

$$n\lambda = 2d\,sin(\theta)$$

Where $n$ is an integer, $\lambda$ is the X-ray wavelength used for the measurement, $\theta$ is the angle of incidence between the X-ray beam and the sample, and $d$ is the interplaner spacing between crystal planes defined by the Miller indices $h$, $k$, and $l$, which relates to the crystallographic $a$, $b$, and $c$ parameters of the crystal unit cell. Thus if a sample contains any crystallites in a preferred orientation, the reflections presented as ($hkl$) will not be uniformly found in the powder diffraction pattern. Instead, reflections of predominantly ($h00$), ($0k0$), or ($00l$) will be found, which indicates preferred orientation along the crystallographic $a$-, $b$-, or $c$-direction respectively.

As evidenced in Examples 4, 5, and 8, the X-ray diffraction patterns of the synthesized hexaferrite permanent magnets are characterized by having a high degree of preferred orientation along the crystallographic ($00l$) reflection, with these reflections being largely more intense than other reflections.

One embodiment of the present invention is a strontium hexaferrite permanent magnet as defined herein, further comprising pronounced Bragg reflections along the ($00l$) reflection, as evidenced by powder X-ray diffraction obtained in reflection mode using Co-Ka radiation.

As already briefly explained, a uniform or non-aligned sample will be characterized by Bragg reflection intensities, stemming from randomly oriented crystallites for all Miller indices. The extent of alignment may as such be evaluated by comparing the relative intensities of orthogonal Bragg reflections, e.g., the comparison of a ($00l$) reflection which corresponds to a crystallite lying flat on its face, and a ($hk0$) reflection which corresponds to a crystallite standing on its side.

One embodiment of the present invention is a strontium hexaferrite permanent magnet comprising highly aligned strontium hexaferrite, characterized by its most intense Bragg reflections being the (006), (008), (107) and (0014) reflections, and wherein the (008)/[(110+008)] integrated intensity ratio is at least 0.5 as obtained by X-ray powder diffraction using Co-Ka radiation.

One embodiment of the present invention is the strontium hexaferrite permanent magnet as defined herein, further comprising an X-ray powder diffraction pattern with characteristic peaks expressed in 2-theta angle (°) for (006) at $2\theta = 26.9° \pm 0.2°$, (110) at $2\theta = 35.4° \pm 0.2°$, (008) at $2\theta = 36.3° \pm 0.2°$, (107) at $2\theta = 37.7° \pm 0.2°$ and (0014) at $2\theta = 65.8° \pm 0.2°$ as obtained using Co-Ka radiation.

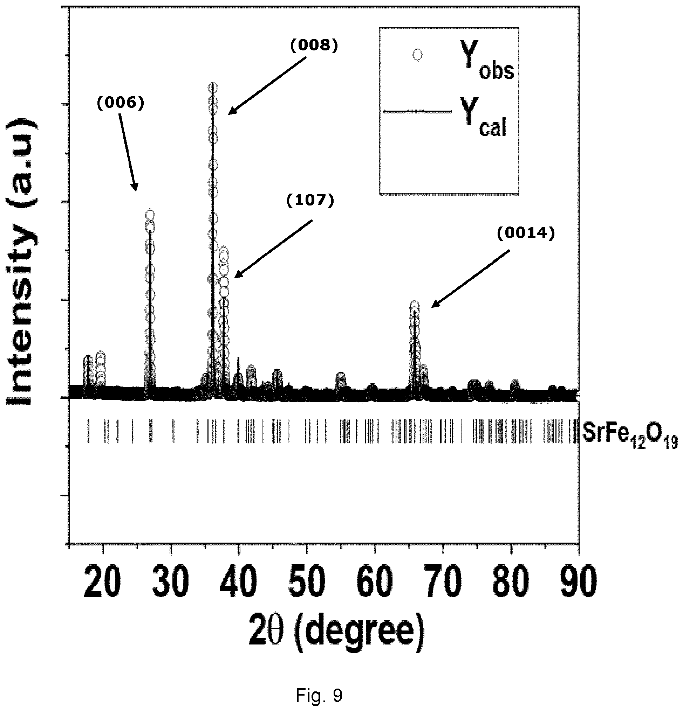

One embodiment of the present invention is the strontium hexaferrite permanent magnet as defined herein, with a powder X-ray pattern substantially similar to Figure 9.

This alignment effect originates from the crystallite anisotropy of the utilized precursors, as there are numerous examples in prior art of producing hexaferrite permanent magnets from isotropic precursors, to the result that no alignment is observed in the final product.

To have predominantly all the crystallites in a magnetic sample aligned in the same direction is also to have the magnet moments of said sample aligned in the same direction. Figuratively speaking, this is equal to aligning all the magnetic field lines of small individual magnets in the same direction to achieve a synergistic effect and generate a larger unidirectional magnetic field. Thus magnets constructed in this way may possess superior magnetic properties compared to non-aligned versions of the same magnets, as evidenced in Examples 5, 6 and 8.

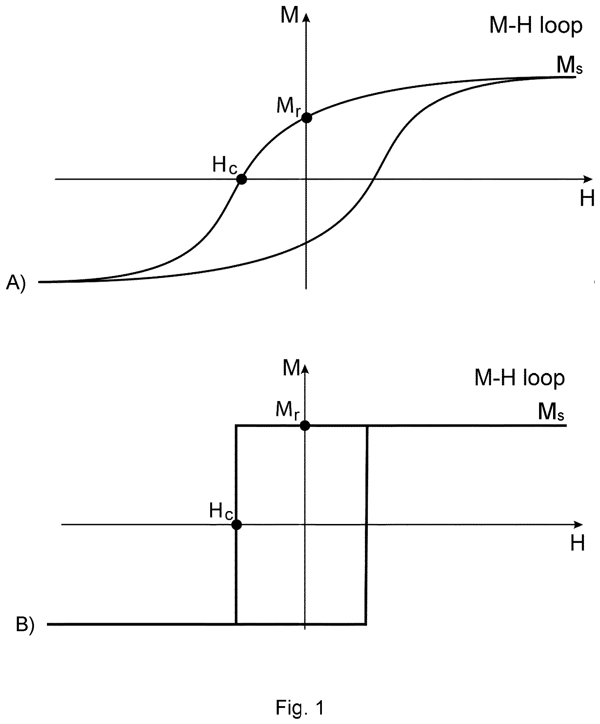

The standard of evaluating magnetic properties in materials is to examine the hysteretic behaviour of a magnet (see Figure 1). Key parameters that govern the macroscopic magnetic properties of materials are remanence magnetization ($M_r$), saturation magnetization ($M_s$), coercive field ($H_c$), and maximum energy product ($BH$)$_{max}$, all of which can be extracted from the magnetic hysteresis loop.

When measuring magnetic hysteresis, a sample is subjected to an external magnetic field, which is increased from zero and up. The magnetization of the sample will then grow as the external magnetic field is increased. When the magnetization of the sample no longer increases, despite the application of larger magnetic fields, the magnetization is said to have saturated. This value is called saturation magnetization ($M_s$). The external magnetic field is then decreased back down to zero to demagnetize the sample. This causes the magnetization to decrease to a certain extent. At zero applied field (i.e., H = 0) if the magnetization is non-zero, this value will be equivalent to the remanence magnetization ($M_r$). The sign of the external field is changed, and the field is increased, figuratively speaking, in the opposite direction. Since the magnetization at zero applied field of a magnet is non-zero, a negative field must be applied to bring the magnetization to zero. The value of this field is called the coercive field ($H_c$).

The alignment of moments in a sample will also impact the shape of the magnetic hysteresis curve as evidenced in Figure 1. A highly aligned magnet will have a very square hysteresis curve where magnetization and demagnetization events occur very abruptly upon reaching the coercive field value. If the sample is less aligned, the hysteresis loop will be more smooth in its shape. Likewise the magnetization and demagnetization events will be more gradual. The maximum energy product ($BH$)$_{max}$ is strongly influenced by the shape of the hysteresis loop. Consequently a high degree of squareness as defined by $M_r/M_s$ is favored for increasing ($BH$)$_{max}$.

One embodiment of the present invention is the strontium hexaferrite permanent magnet as defined herein, further comprising a hysteretic squareness ratio ($M_r/M_s$) which is between 0.65 and 1.0, such as between 0.70 and 1.0, such as between 0.75 and 1.0, such as between 0.80 and 1.0, such as between 0.85 and 1.0, such as between 0.95 and 1.0.

**EP 4 229 662 B1**

One aspect of the present invention is the strontium hexaferrite permanent magnet as defined herein, further comprising a hysteretic squareness ratio ($M_r/M_s$) is between 0.95 and 1.0.

One embodiment of the present invention is the strontium hexaferrite permanent magnet as defined herein, further comprising a hysteretic squareness ratio ($M_r/M_s$) is between 0.85 and 1.0.

One embodiment of the present invention is the strontium hexaferrite permanent magnet as defined herein, further comprising a hysteretic squareness ratio ($M_r/M_s$) is between 0.80 and 1.0.

One embodiment of the present invention is the strontium hexaferrite permanent magnet as defined herein, further comprising a hysteretic squareness ratio ($M_r/M_s$) is between 0.75 and 1.0.

One embodiment of the present invention is the strontium hexaferrite permanent magnet as defined herein, further comprising a hysteretic squareness ratio ($M_r/M_s$) is between 0.70 and 1.0.

One embodiment of the present invention is the strontium hexaferrite permanent magnet as defined herein, further comprising a hysteretic squareness ratio ($M_r/M_s$) is between 0.65 and 1.0.

As a result of the enhanced magnetic properties obtained by the use of anisotropic non-magnetic precursors, the highly aligned strontium hexaferrite permanent magnets of the present disclosure demonstrate a broad and useful potential use in replacement of other ferrite materials or $Nd_2Fe_{14}B$ NIB rare-earth magnets.

One embodiment of the present invention is the use of the aligned permanent magnets as defined herein as a magnetic component in a device.

In a further embodiment of the present disclosure, the device as defined herein is any one of:

    a. storage devices,
    b. generators,
    c. stators in electric motors and/or electric generators
    d. audio devices,
    e. magnetic imaging scanners,
    f. magnetic brakes,
    g. linear motors,
    h. electrodynamic bearings, or
    i. magnetic toys.

**Description of figures**

**Figure 1:** standard magnetic $M$ versus $H$ hysteresis loop of A) a non-aligned magnet and B) a highly aligned magnet. $M_s$, $M_r$, and $H_c$ are indicated on the figures

**Figure 2:** A) schematic representation of the platelet shaped crystallites of the non-magnet precursor, and B) schematic representation of the needle shaped crystallites of the non-magnetic precursor. The $A$ and $C$ lengths are indicated by arrows.

**Figure 3:** powder X-ray diffraction pattern of the non-magnetic precursors as prepared according to Example 1. The graph also shows the results of the Rietveld analysis performed according to the specification of Example 1. Bragg peak indicators of each constituent of the Rietveld analysis are shown and marked with arrows.

**Figure 4:** TEM images of the non-magnetic precursors prepared according to Example 1 at a) 100°C, b) 150°C, and c) 200°C.

**Figure 5:** powder X-ray diffraction pattern of the non-magnetic Hematite precursor as prepared from $FeCl_3·6H_2O$ according to Example 2.

**Figure 6:** HR-TEM image showing platy morphology of hematite particles. Some crystallites are tilted, which causes them to appear darker. Pale Goethite needles are also observed in the TEM image.

**Figure 7:** Powder X-Ray diffraction pattern of the non-magnetic Goethite precursor as prepared according to Example 3. The graph also shows the results of the Rietveld analysis performed according to the specification of Example 3. Bragg peak indicators are shown under the diffraction pattern.

**Figure 8:** TEM image of the non-magnetic precursors $\alpha$-FeOOH prepared according to Example 3 at 100 °C for 12 hours

**Figure 9:** powder X-ray diffraction pattern of the hexaferrite permanent magnet labelled SPS-3 obtained by SPS according to Example 4 with indicators of relevant Bragg reflections. The graph also shows the results of the Rietveld analysis performed according to the specification of Example 4. Bragg peak indicators are shown under the diffraction pattern.

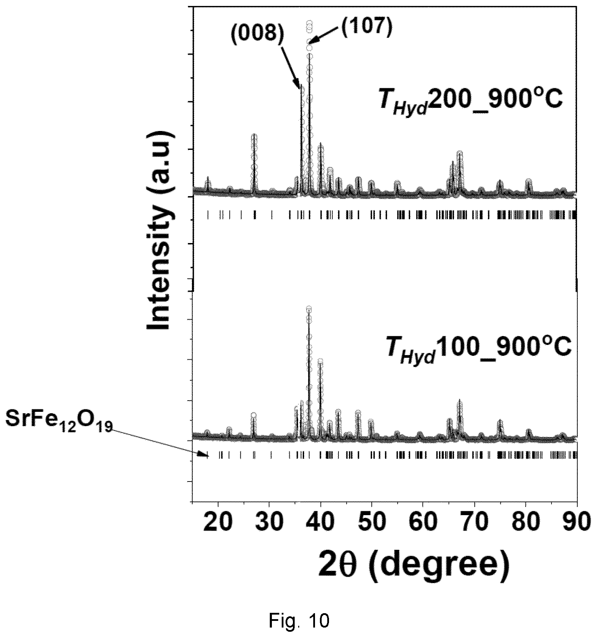

**Figure 10:** powder X-ray diffraction pattern of the hexaferrite permanent magnets obtained by compacting and subsequent calcination according to Example 5 with indicators of relevant Bragg reflections. The graph also shows the results of the Rietveld analysis performed according to the specification of Example 5. Bragg peak indicators are shown under each diffraction pattern. The top and bottom samples differ only in their non-magnetic precursor production temperature. The permanent strontium hexaferrite magnet obtained by either way has the same relevant Bragg reflections and Bragg peak indicators.

**Figure 11:** magnetic hysteresis loops of the hexaferrite permanent magnets prepared by SPS according to Example 4, labelled SPS-1, SPS-2 and SPS-3, with a zoom on $M_r$ and $H_c$ region.

**Figure 12:** magnetic hysteresis loops of the hexaferrite permanent magnets prepared by compaction and subsequent calcination according to Example 5.

**Figure 13:** powder X-ray diffraction pattern of the hexaferrite permanent magnets obtained by compacting and subsequent calcination according to Example 8 with indicators of relevant Bragg reflections. The graph also shows the results of the Rietveld analysis performed according to the specification of Example 8. Bragg peak indicators of each constituent of the precursor are shown under each diffraction pattern.

**Figure 14:** magnetic hysteresis loops of the hexaferrite permanent magnets prepared by compaction and subsequent calcination according to Example 8 with a zoom on the $M_r$ and $H_c$ region. A) comparison of magnetic hysteresis for all samples of Example 8 produced by either dry mixing (DM) or wet mixing (WM) and compacted at either low pressure (220 MPa) or high pressure (870 MPa). B) comparison of magnetic hysteresis for an aligned hexaferrite sample (WM 870MPa) and a hexaferrite sample with random orientation.

**Examples**

***Example 1: Preparation and structural characterization of non-ferromagnetic precursor comprising anisotropic crystallites of six-line ferrihydrite (SLF) precursor to be used for subsequent production of hexaferrite permanent magnets:***

A solution of 3 M $Fe(NO_3)_3 \cdot 9H_2O$ and 0.75 M $Sr(NO_3)_2$ in a ratio of 8:1, respectively, was co-precipitated by the slow addition of 8 M NaOH to form a gel. Following complete addition of NaOH, the gel was allowed to stir for approximately 3 hours. The gel was then transferred to a 175 ml teflon-lined steel autoclave and placed inside an oven operating at a temperature of 200°C, 150°C, or 100°C for 5 hours. The thus obtained samples were identified as SLF-200, SLF-150 and SLF-100 according to the synthesis temperature.

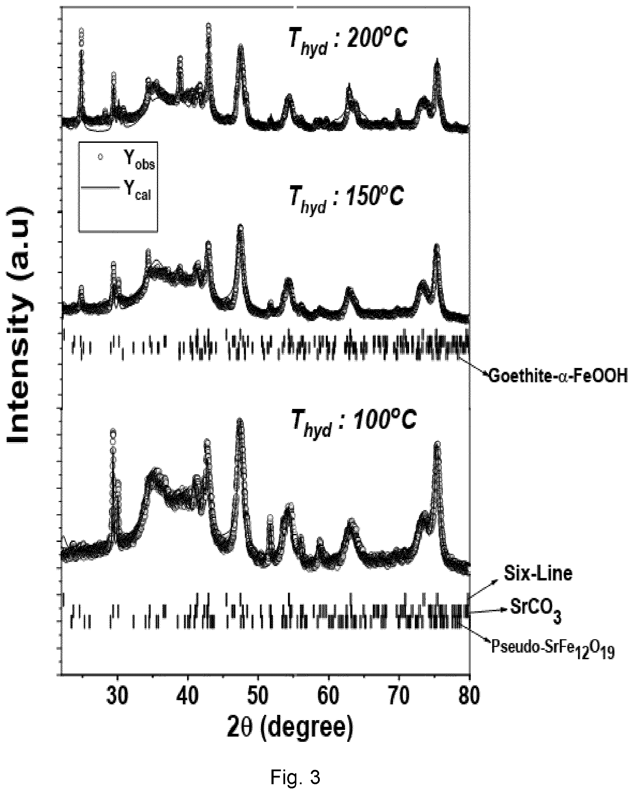

The precursors were examined by X-ray powder diffraction (Rigaku SmartLab diffractometer, Co-Ka radiation) and analyzed by Rietveld refinement using the FullProf Suite software package, including parameters such as zero point correction, scale factor, lattice constants, Lorentzian crystallite size parameters Y and SZ, and preferred orientations. The XRD patterns of the 3 precursor samples are shown in (Figure 3). A Thompson-Cox-Hastings pseudo-Voigt function was used to describe the peak profile. Rietveld refinement retrieved a composition of the three samples. From this, the amount of six-line ferrihydrite (SLF) present in the non-magnetic precursor is approximately 15, 38 and 30% for SLF-100, SLF-150 and SLF-200 respectively. In the present analysis, the SLF phase was refined based on the Dritts model. SLF-100 showed poor crystallinity when compared with that of SLF-150 and SLF-200 as a consequence of the lower hydrothermal temperature used in the reaction. Rietveld refinement of the as-synthesized samples result in crystallites with platelet like shape, and an average A-length of 11 nm compared to C-length of 5.5 nm can be extracted.

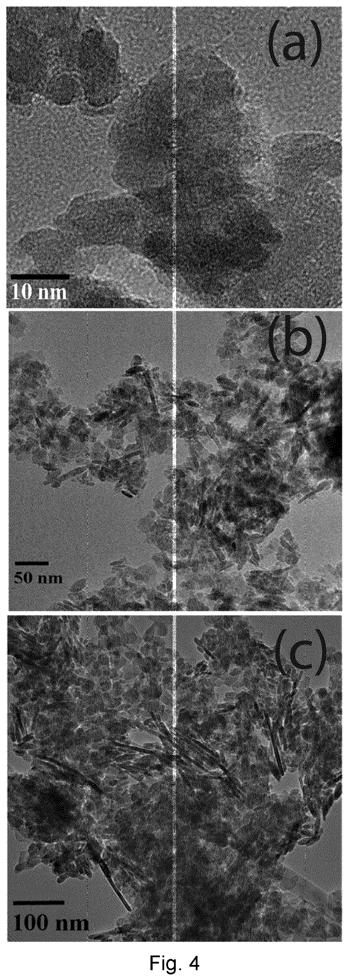

Transmission electron microscopy (TEM) and spatially resolved elemental analysis were recorded for SLF-150 and SLF-200 on a FEI TALOS F200A TEM microscope operating at 200 kV, for approximately 200 particles and analysed using the Gatan software. The TEM micrographs confirmed the presence of microscopic platelets present in the as-synthesized powers of SLF-150 and SLF-200, see Figure 4. Lognormal fit to the size extracted from the TEM images results in particle dimensions of $A = 23$ nm and $C = 7$ nm for 150 °C, while the 200 °C gave dimensions of $A = 30$ nm and $C = 8$ m.

Since these non-magnetic nano-crystallites are not interacting with each other by way of magnetism, the crystallites can easily align along their faces when optimum pressure is applied either in cold compaction or using a spark plasma sintering (SPS). The alignment can happen at room temperature, because no magnetic interaction needs to be broken. However, for the conversion into $SrFe_{12}O_{19}$ elevated temperatures are needed.

*Example 2: Preparation and structural characterization of non-ferromagnetic precursor comprising anisotropic crystallites of hematite ($\alpha$-Fe$_2$O$_3$) for subsequent preparation of hexaferrite permanent magnets.*

Hematite ($\alpha$-Fe$_2$O$_3$) precursors having a platelet morphology can be synthesized via a wet chemical approach as described in either of the following. Other reagents known to a person skilled in the art may be substituted to produce similar hematite crystallite precursors.

### Hematite precursor made from FeCl$_3$·6H$_2$O:

A 60 mL aqueous solution of 2 M of $FeCl_3 \cdot 6H_2O$, was added dropwise to a 60 mL, 8 M NaOH solution whilst stirring, resulting in a dark red precipitate forming upon addition. The precipitate solution was transferred to a Teflon-lined stainless-steel autoclave, then heated at 160 °C for 2 hours. Once cooled the precipitate was washed using deionised water and centrifugated until the supernatant was pH 7. It was finally washed once with ethanol, placed in drying oven at 85°C until dry, then ground with a pestle and mortar.

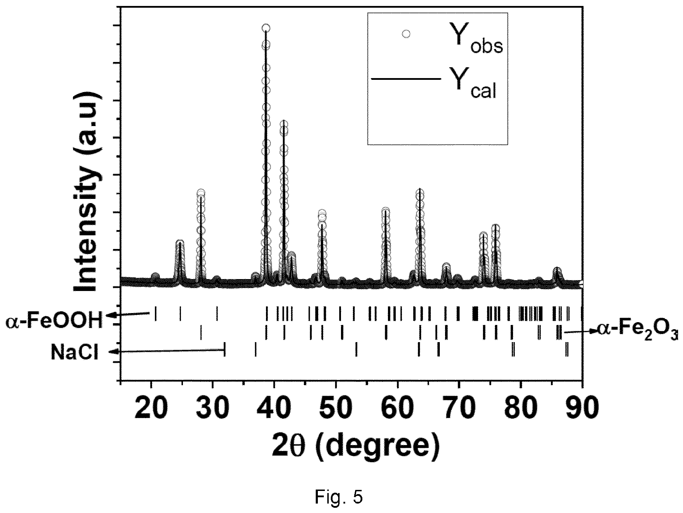

The precursors were examined by X-ray powder diffraction (Rigaku SmartLab diffractometer, Co-Ka radiation) and analyzed by Rietveld refinement using the FullProf Suite software package, including parameters such as zero point correction, scale factor, lattice constants, Lorentzian crystallite size parameters Y and SZ, and preferred orientations. The XRD patterns of the 160 °C precursor is shown in Figure 5. A Thompson-Cox-Hastings pseudo-Voigt function was used to describe the peak profile.

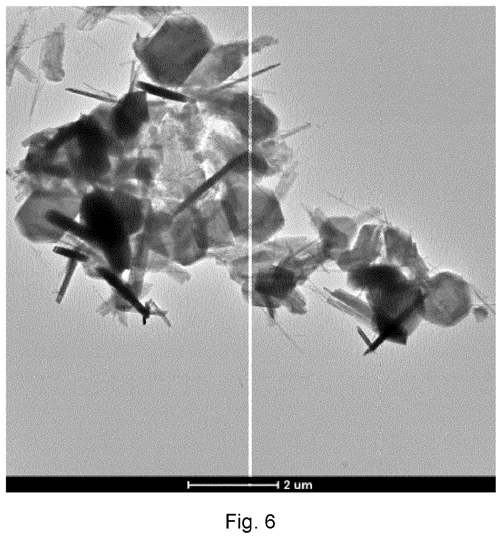

The particle morphology analysis with TEM revealed hexagonal platelets with A-sizes in the order of 1-2 $\mu$m shown in Figure 6. The hexagonal platelets of hematite are either oriented with the platelet plane parallel to the view (light plate shape) or perpendicular (dark elongated shape). The observed light needles are goethite ($\alpha$-FeOOH).

### Hematite precursor made from Sr(NO$_3$)$_2$ and Fe(NO$_3$)$_3$·9H$_2$O:

$Sr(NO_3)_2$ and $Fe(NO_3)_3 \cdot 9H_2O$ were dissolved to 1 M solutions in demineralized water and mixed in a Teflon lined autoclave under magnetic stirring. The molar ratio Fe/Sr (denoted Fe/Sr in the following) was varied in the range between 1 and 12. Water was added to the mixture to obtain a final $Sr^{2+}$ concentration of 0.1 M. NaOH (or alternatively KOH) was added dropwise as a 16 M solution under constant stirring until a reddish brown precipitate was formed. [OH$^-$]/[NO$_3^-$] molar ratios of 1.25, 2, and 4 were used. The autoclaves were subsequently placed in a preheated convection oven at 240 °C for 3 hours. The product of the autoclave reaction was washed three times in demineralized water and once with 4 M $HNO_3$ to remove $SrCO_3$ impurities. Finally, the product was dried at 100 °C. The precursors were examined and analyzed as described above.

*Example 3: Preparation and structural characterization of non-ferromagnetic precursor comprising anisotropic crystallites of Goethite ($\alpha$-FeOOH) for subsequent preparation of hexaferrite permanent magnets.*

### Goethite ($\alpha$-FeOOH) precursor made from Fe(NO$_3$)$_3$.9H$_2$O

A 40 mL aqueous solution of 3 M of $Fe(NO_3)_3 \cdot 9H_2O$ was made and 8M NaOH solution was added dropwise, resulting in a dark red precipitate forming upon addition of NaOH. The precipitate solution was transferred to a Teflon-lined stainless steel autoclave. The pH was maintained at 11. The autoclave was heated at 100°C for 10 hours. Once cooled the precipitate was washed using deionised water and centrifuged until the supernatant was pH 7. It was then washed once with ethanol, placed in drying at 85°C until dry, then ground with pestle and mortar.

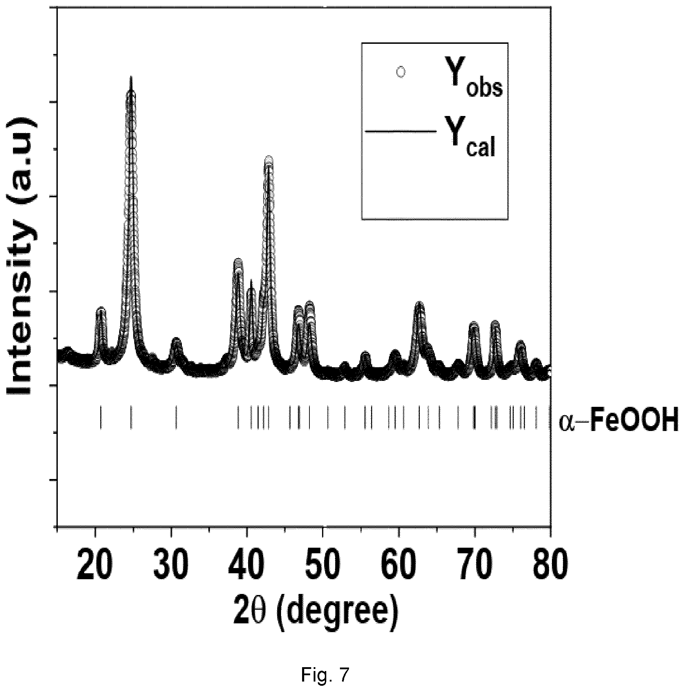

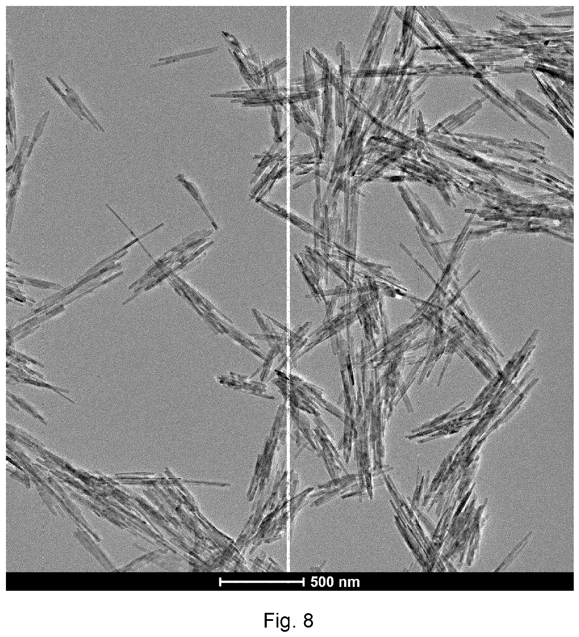

The precursors were examined by X-Ray powder diffraction (Rigaku Smart Lab Diffractometer, Co-Ka radiation) and analysed by Reitveld refinement using FullProf suite software package, including parameters such as zero point correction, scale factor, lattice constants, Lorentzian crystallite size parameters Y and SZ and preferred orientations. The XRD patterns of the 100°C precursor is shown in Figure 7. A Thomas-Cox-Hastings pseudo-Voigt function was used to describe the peak profile. A TEM image of the goethite sample is shown in Figure 8, clearly revealing the needle-like morphology of the crystallites

*Example 4: Preparation and structural characterisation of aligned magnetic M-type hexaferrite using non-ferromagnetic precursor of platelet shaped six-line ferrihydrite (SLF) and spark plasma sintering (SPS).*

The non-magnetic precursors prepared according to Example 1 were compacted into bulk strontium hexaferrite magnets using spark plasms sintering (SPS). 0.8 g of the precursor powder was weighed and placed in a graphite die of 12.6 mm inner diameter and enclosed between two graphite punches. Graphite paper (~ 0.2 $\mu$m) was placed between the powders and the graphite die and between the die and the upper and lower punch. The die was subsequently inserted in a vacuum chamber of a SPS Synthex Inc. 1500 model, Dr. Sinter Lab series spark plasma sintering system. In the chamber, a uniaxial pressure was applied to the punches while a pulsed dc current was passed through the die, sintering the powders contained within. A maximum temperature of 750 °C and maximum pressure of 100 MPa were applied during the sintering process, which was completed after 8 minutes. The die was freely cooled before the sintered pellet was extracted. Finally, the graphite paper that adhered to the pellet was removed by polishing. The thus produced pellet, consisting of aligned M-type strontium hexaferrite permanent magnets, having a diameter of 12.6 mm and a thickness of ~1 mm. The SPS pellets were named SPS-1, SPS-2 and SPS-3 corresponding to the SLF-100, SLF-150 and SLF-200 precursor samples respectively.

The SPS pellets were subjected to X-ray diffraction analysis using the same Rietveld parameters presented in Example 1. The powder X-ray diffractograms collected on the obtained SPS pellets reveal a major suppression of the Bragg reflections with *(hk0).* This selective Bragg reflection suppression is due to the crystallographic orientation of the crystallites within the sample, this is also referred to as crystallographic preferred orientation or texture and it is due to the anisotropic shape of the crystallites. The anisotropy effect is especially pronounced in the SPS-3 sample, where almost a complete suppression is observed for any reflection other than *(001)* as shown in Figure 9. The preferred orientation was implemented in the structural modelling of the powder diffraction data using the March-Dollase multiaxial function. According to the Rietveld refinements, SPS-3 exhibits the largest degree of preferred orientation while SPS-1 has the lowest degree of preferred orientation. Other relevant physical properties are summarized further below in Table 1.

*Example 5: Preparation and structural characterisation of aligned magnetic M-type hexaferrite using non-ferromagnetic precursor of platelet shaped six-line ferrihydrite (SLF) and cold compaction followed by calcination.*

The precursor powders described in example 1 were subjected to conventional co-compaction followed by calcination of the compacted pellets. 2 pellets of 0.15 g for each of the precursor powders SLF-100, SLF-150, and SLF-200 were prepared for sintering at 750 °C, 900 °C, and 1050 °C. The pellets were compacted with similar conditions of 2 tonnes of pressure for five minutes corresponding to 700 MPa. After compaction to dense pellets, the samples were sintered at 750 °C, 900 °C, and 1050 °C for 2 hours. During the sintering, the samples were held in an $Al_2O_3$ crucible. The compacted and sintered pellets (identified as $T_{Hyd}(100)$, $T_{Hyd}(150)$, and $T_{Hyd}(200)$ in reference to the precursor) were subjected to X-ray diffraction analysis employing the Rietveld analysis parameters as presented in Example 1, see Figure 10. Relevant physical properties are summarized further below in Table 1.

*Example 6: Characterization of magnetic properties in aligned M-type hexaferrite magnets obtained from using non-ferromagnetic precursor of platelet shaped six-line ferrihydrite (SLF) and spark plasma sintering (SPS).*

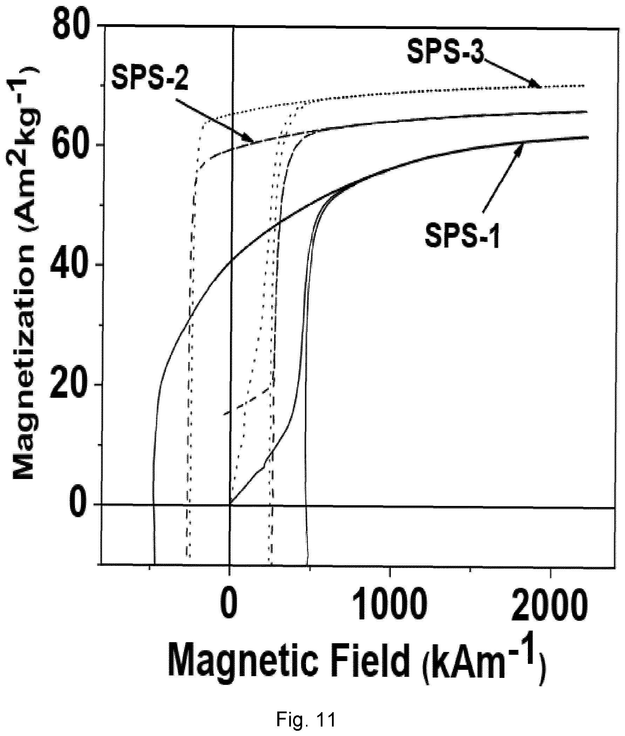

Magnetic properties of the SPS pellets were measured using a Quantum Design Physical Properties Measurement System (PPMS) equipped with a vibrating sample magnetometer (VSM). For the measurements, the SPS pellet was placed in a tubular brass sample holder and held between two quartz rods. Room temperature magnetic hysteresis loop measured on the SPS compacted pellets are presented in Figure 11 and was measured using standard experimental settings well-known to a person of skill in the art.

The alignment of the crystallites in a magnet can also be evaluated indirectly in the magnetism of said magnet based on the hysteretic squareness ratio defined by $M_R/M_S$. The Stoner Wohlfrath model states that an ideally aligned magnet gives a ratio equal to unity, while it decreases to 0.5 for completely randomly oriented crystallites. Table 2 found further below summarizes this and other key properties of the presented samples.

*Example 7: Characterization of magnetic properties in aligned M-type hexaferrite magnets obtained from using non-ferromagnetic precursor of platelet shaped six-line ferrihydrite (SLF) and cold compaction followed by calcination.*

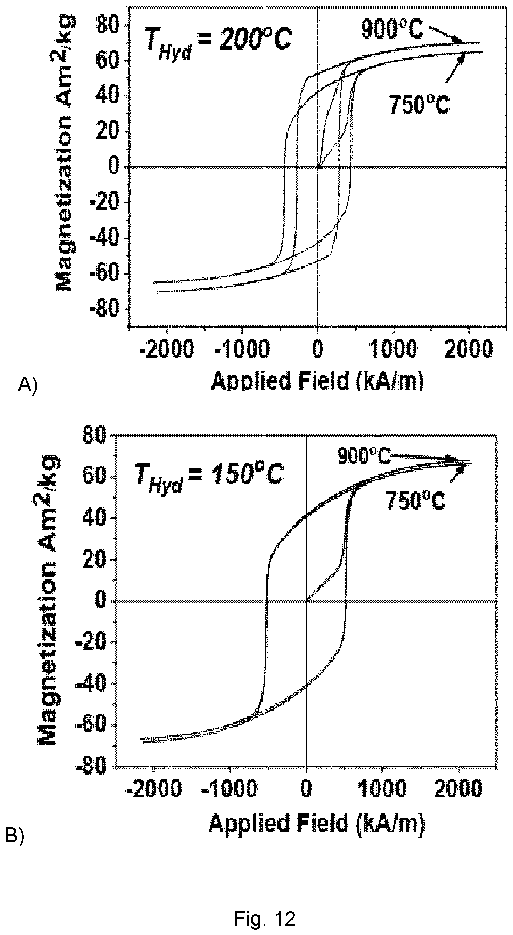

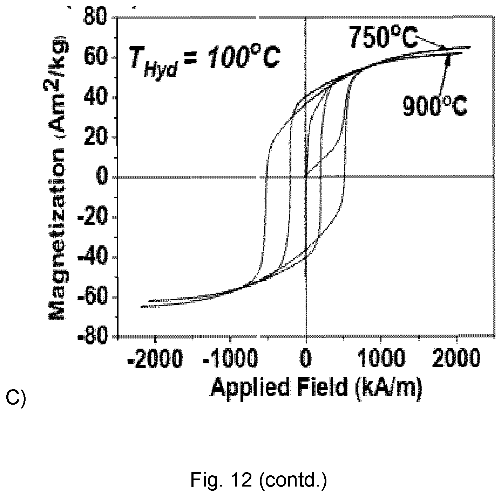

In a similar manner to Example 6, VSM magnetic measurements were conducted on the permanent magnets obtained according to Example 5 ($T_{Hiyd}(100)$, $T_{Hyd}(150)$, and $T_{Hyd}(200)$) to extract the magnetic hysteresis loops (Figure 12). Extracted physical properties are summarized below in Table 2.

Table 1: Overview of structural and magnetic properties of strontium hexaferrite permanent magnet prepared from the SLF-precursors of Example 1 using cold compaction or SPS compaction (Example 6).

| Sample | Sintering Temp (°C) | Pressure (MPa) | $G_1$ pref. | 008/ (008+110) | $M_R/M_S$ | $H_C$ (kA/m) | $BH_{max}$ (kJ/m$^3$) |
|---|---|---|---|---|---|---|---|
| $T_{Hyd}(100)$ | 750 | 700 | 0.907 | 0.322 | 0.563 | 502 | 9 |
| | 900 | 700 | 0.752 | 0.508 | 0.651 | 199 | 11 |
| $T_{Hyd}(150)$ | 750 | 700 | 0.832 | 0.416 | 0.639 | 511 | 11 |
| | 900 | 700 | 0.845 | 0.404 | 0.610 | 509 | 12 |
| | 1050 | 700 | 0.665 | 0.681 | 0.756 | 78 | 9.28 |
| $T_{Hyd}(200)$ | 750 | 700 | 0.737 | 0.566 | 0.654 | 470 | 12 |
| | 900 | 700 | 0.537 | 0.835 | 0.747 | 279 | 21 |
| | 1050 | 700 | 0.494 | 0.906 | 0.806 | 100 | 18 |
| SPS-1 | 750 | 100 | 0.694 | 0.623 | 0.659 | 474 | 11 |
| SPS-2 | 750 | 100 | 0.387 | 0.951 | 0.898 | 265 | 27 |
| SPS-3 | 750 | 100 | 0.322 | 0.981 | 0.926 | 247 | 33 |

The parameter $G_1$ stems from the Rietveld refinement and gives a qualitative measure for the preferred orientation in the sample. The lower the number the higher the preferred orientation. The number can vary between 1 and 0, where 1 is a randomly oriented sample and 0 is close to a single crystal. Another method for looking at preferred orientation is to look at the integrated area of some of the characterizing peaks found in the diffraction patterns, e.g. the (110) and (008) peaks. Here (008) gives information on crystallites being oriented parallel with the wanted direction, while (110) is crystal planes perpendicular to the wanted direction. The following index is used (008)/[(110)+(008)] to quantify the alignment and should preferably be between 1 and 0.5 with 1 representing the most aligned sample.

$M_R/M_S$ ratio from Table 1 shows the squareness ratio for the differently prepared samples. For all the presented magnets found in Table 2, it is evident that the temperature used in producing the non-magnetic anisotropic precursor has a direct influence on the hysteretic squareness ratio, with a higher synthesis temperature resulting in a squareness ratio closer to unity. This in turn shows that sample alignment can be controlled by the synthesis temperature, provided that initial nanoparticles synthesized are thin platelets or needles.

The $(BH)_{max}$ of all samples were analyzed and it was found that SPS-3 showed the highest value of $(BH)_{max}$ with 33(4) kJ/m$^3$, followed by SPS-2 (27 kJ/m$^3$) and $T_{Hyd}(200)$ (21 kJ/m$^3$). These samples also show the highest degree of crystallite alignment as evidenced by $G_1$ and [008/(008+110)] value.

The magnetic properties as evaluated by magnetic hysteresis showed an enhanced maximum energy product of the aligned M-type strontium hexaferrite obtained using anisotropic non-magnet precursors of $(BH)_{max}$ = 33 kJ/m$^3$ compared to those found in commercially available La-Co free hexaferrites, obtained by dry processing [$(BH)_{max}$ = 26-29 kJ/m$^3$].

***Example 8: Preparation and structural characterisation of aligned magnetic M-type hexaferrite using non-ferromagnetic precursor of platelet shaped hematite ($\alpha$-Fe$_2$O$_3$) and cold compaction followed by calcination.***

Different ways of mixing the precursor powder from Example 2 with SrCO$_3$ and Sr(OH)$_2$ was tested. Different pressures was also applied in the cold compaction to check the effect on the alignment.

**Dry mixing:**

A precursor from Example 2 ($\alpha$-Fe$_2$O$_3$ 70 wt.% and $\alpha$-FeOOH 30 wt.%) 4.003 g (50.1 mmol) was weighed off and hand mixed in an agate pestle and mortar with 0.619 g (4.18 mmol) of SrCO$_3$ for 15 minutes. A mixing ratio of 1:12 molar ratio of Sr:Fe was used.

**Wet mixing:**

To avoid the grinding having an effect of the shape of the crystallites, the precursor material in Example 2 was wet mixed with $Sr(OH)_2$. A mass of 0.476 g (3.91 mmol) of anhydrous $Sr(OH)_2$ was dissolved in 30 mL deionised water until a homogeneous solution was achieved at 85 °C. 3.750g (47.0 mmol) of precursor from Example 2 was added and stirred continuously for 45 mins at 85 °C. The resultant slurry was poured onto a petri dish and was dried on a hot plate at 35 °C overnight. The dried mixture was scraped out and ground in a pestle and mortar for 2 minutes. A mixing ratio of 1:12 molar ratio of Sr:Fe was used.

**Cold compaction and calcination:**

Four pellets of 0.4 g were prepared, two of the wet mixed (WM) and two of the dry mixed (DM). All pellets were uniaxial cold pressed in a 12.6 mm diameter pressing die. The low pressure pellets was made were made at 2.5 tonnes/cm$^2$ of pressure for 5 minutes corresponding to a pressure of 220 MPa. The dry mixed and wet mixed pellets were named DM 220MPa and WM 220MPa respectively. High pressure pellets were pressed at 10 tonnes/cm$^2$ of pressure for 5 minutes corresponding to 870 MPa. The dry mixed and wet mixed pellets named DM 870MPa and WM 870MPa respectively. After compaction to dense pellets all samples were calcined at 1100°C for 2 hours. During the calcination the samples were held in an $Al_2O_3$ crucible.

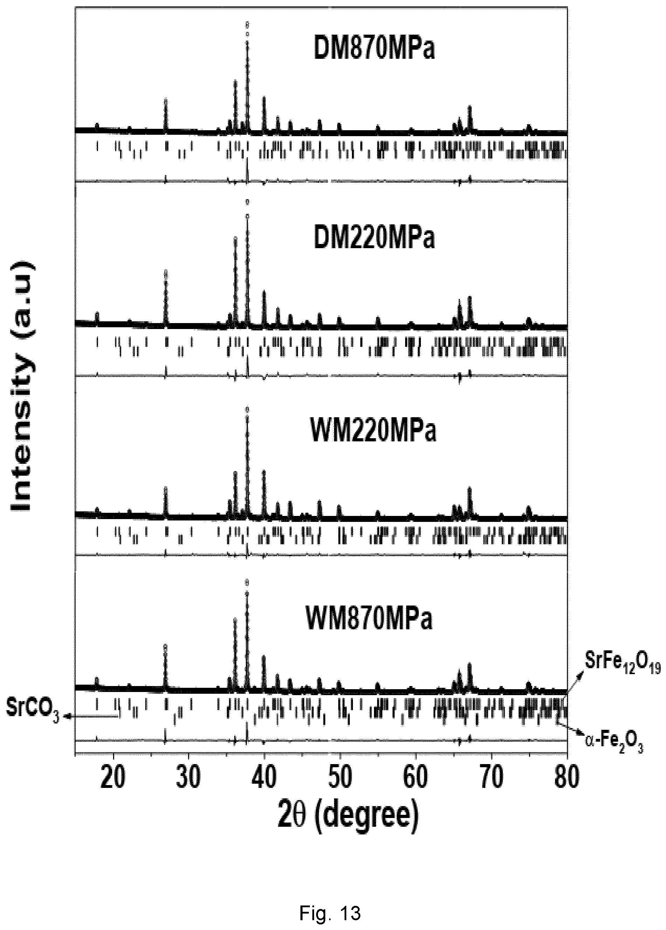

After pressing and calcination, the pellets were subjected to X-ray diffraction analysis using the same Rietveld parameters presented in Example 4. The powder X-ray patterns collected on the as-obtained calcined pellets reveal a major suppression of the Bragg reflections with *(hk0)*. Figure 13 shows the powder diffraction pattern, where the preferred orientation was refined using the March-Dollase function as already explained. The XRD data reveal a clear preferred orientation of the sample. A summary of relevant physical properties is found further below in Table 3.

***Example 9: Characterization of magnetic properties in aligned M-type hexaferrite magnets obtained from using non-ferromagnetic precursor of platelet shaped hematite ($\alpha$-Fe$_2$O$_3$) and cold compaction followed by calcination.***

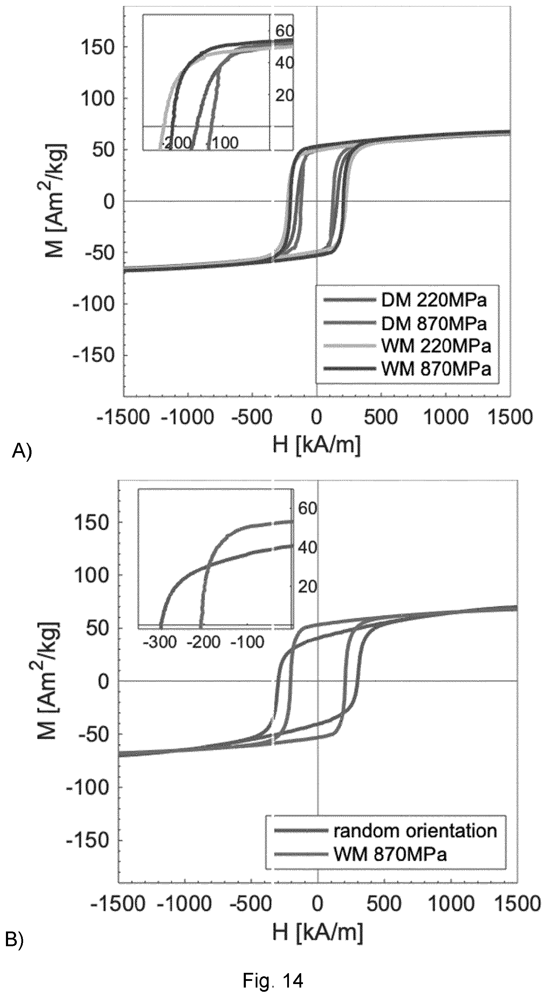

In a similar manner to Example 6, VSM magnetic measurements were conducted on the permanent magnets obtained according to Example 8 (DM 220MPa, DM 870MPa, WM 220MPa, and WM 870MPa)) to extract the magnetic hysteresis loops (Figure 14). Extracted physical properties are summarized below in Table 3.

Table 2: Overview of structural and magnetic properties of strontium hexaferrite permanent magnet prepared from the hematite-precursors of Example 2 using cold compaction and calcination (Example 8).

| Sample | Pressure (MPa) | $G_1$ pref | $M_r/M_s$ | $H_c$ (kAm$^{-1}$) | $BH_{max}$ (kJm$^{-3}$) |
|---|---|---|---|---|---|
| **Random orientation** | | 0.98 | 0.54 | 297 | 11(2) |
| **Dry mixed** | 220 | 0.59 | 0.71 | 154 | 15(2) |
| **Dry mixed** | 870 | 0.53 | 0.74 | 122 | 15(2) |
| **Wet mixed** | 220 | 0.64 | 0.70 | 225 | 18(2) |
| **Wet mixed** | 870 | 0.54 | 0.75 | 185 | 21(2) |

Table 3 illustrates the possibility and potential of producing rare-earth-free permanent magnets retaining a substantial maximum energy product from anisotropic non-magnetic precursors in a simple two-step process combining cold compaction and subsequent calcination. Such a simple two-step process is readily scalable to large production facilities due to its cheap costs and easy handling.

***Example 10: Preparation and structural characterisation of aligned magnetic M-type hexaferrite using non-ferromagnetic precursor mixture of platelet shaped hematite ($\alpha$-Fe$_2$O$_3$) and of needles shaped goethite ($\alpha$-FeOOH) and cold compaction followed by calcination.***

Different ratios of hematite and goethite was mixed with corresponding amounts of $SrCO_3$. The hematite and goethite was prepared separately as in Example 2 and 3. The three powders were mixed as in Example 8 dry mixing.

Five pellets of ~0.4 g were prepared, with the following hematite and goethite ratios 100% hematite, 75% hematite and 25% goethite, 50% hematite and 50% goethite, 25% hematite and 75% goethite, and finally 100% goethite. All pellets were uniaxial cold pressed in a 6 mm diameter pressing die. Applying a pressure of 10 tonnes/cm$^2$ of pressure for

5 minutes corresponding to 870 MPa. The samples were named (100% / 0% hematite / goethite, 75% / 25% hematite / goethite, 50% / 50% hematite / goethite, 25% / 75% hematite / goethite, 0% / 100% hematite / goethite). After compaction to dense pellets all samples were calcined at 1100°C for 2 hours. During the calcination the samples were held in an $Al_2O_3$ crucible.

***Example 11: Characterization of magnetic properties in aligned M-type hexaferrite magnets obtained from using non-ferromagnetic precursor mixture of platelet shaped hematite ($\alpha$-Fe$_2$O$_3$) and of needles shaped goethite ($\alpha$-FeOOH) and cold compaction followed by calcination.***

In a similar manner to Example 6, VSM magnetic measurements were conducted on the permanent magnets obtained according to Example 10 (100% / 0% hematite / goethite, 75% / 25% hematite / goethite, 50% / 50% hematite / goethite, 25% / 75% hematite / goethite, 0% / 100% hematite / goethite). Extracted physical properties are summarized below in Table 4.

Table 4: Overview of structural and magnetic properties of strontium hexaferrite permanent magnet prepared from the hematite-precursors of Example 2 and goethite precursor of Example 3 using cold compaction at 870 MPa and calcination at 1100°C for 2 hours.

| Hematite /Geothite | $G_1$ pref. | 008/ (008+110) | $M_R$ Am$^2$/kg | $M_S$ Am$^2$/kg | $M_R/M_S$ | $H_C$ (kA/m) | $BH_{max}$ (kJ/m$^3$) |
|---|---|---|---|---|---|---|---|
| 100% /0% | 0.61 | 0.72 | 51.8 | 74.1 | 0.70 | 208 | 21 |
| 75% /25% | 0.61 | 0.74 | 51.2 | 74.3 | 0.70 | 181 | 19 |
| 50% / 50% | 0.58 | 0.80 | 51.9 | 74.0 | 0.70 | 202 | 20 |
| 25% / 75% | 0.50 | 0.88 | 54.6 | 73.0 | 0.75 | 174 | 21 |
| 0% / 100% | 0.43 | 0.94 | 59.7 | 72.3 | 0.80 | 157 | 22 |

Table 4 illustrates the possibility and potential of producing rare-earth-free permanent magnets retaining a substantial maximum energy product from anisotropic non-magnetic precursors in a simple two-step process combining cold compaction and subsequent calcination. Such a simple two-step process is readily scalable to large production facilities due to its cheap costs and easy handling.

## Claims

1. A strontium hexaferrite permanent magnet comprising highly aligned strontium hexaferrite, **characterized by** its most intense Bragg reflections being the (*006*), (*008*), (*107*) and (*0014*) reflections, and wherein the (*008*)/[(*110+008*)] integrated intensity ratio is at least 0.5 as obtained by X-ray powder diffraction using Co-Ka radiation.

2. The strontium hexaferrite permanent magnet according to claim 1, further comprising pronounced Bragg reflections along the (*00l*) reflection, as evidenced by powder X-ray diffraction obtained using Co-Ka radiation.

3. The strontium hexaferrite permanent magnet according to any of claims 1 to 2, **characterized by** comprising an X-ray powder diffraction pattern with characteristic peaks expressed in 2-theta angle (°) for (006) at $2\theta = 26.9° \pm 0.2°$, (*110*) at $2\theta = 35.4° \pm 0.2°$, (*008*) at $2\theta = 36.3° \pm 0.2°$, (*107*) at $2\theta = 37.7° \pm 0.2°$ and (*0014*) at $2\theta = 65.8° \pm 0.2°$ as obtained using Co-Ka radiation.

4. The strontium hexaferrite permanent magnet according to any of claims 1 to 3, **characterized by** comprising a hysterisis squareness ratio ($M_r/M_s$) which is between 0.65 and 1.0, such as between 0.70 and 1.0, such as between 0.75 and 1.0, such as between 0.80 and 1.0, such as between 0.85 and 1.0, such as between 0.95 and 1.0.

5. The strontium hexaferrite permanent magnet according to any of claims 1 to 4, **characterized by** comprising a hysteretic squareness ratio ($M_r/M_s$) which is between 0.85 and 1.0, such as between 0.95 and 1.0.

6. Use of a strontium hexaferrite permanent magnet according to any one of claims 1 to 5 as a magnetic component in a device.

**EP 4 229 662 B1**

**Patentansprüche**

1. Strontiumhexaferrit-Permanentmagnet, umfassend hochgradig ausgerichtetes Strontiumhexaferrit, **dadurch gekennzeichnet, dass** seine intensivsten Bragg-Reflexionen die (*006*-), (*008*-), (*107*-) und (*0014*-)Reflexionen sind, und wobei das integrierte Intensitätsverhältnis (*008*)/[(*110+008*)] mindestens 0,5 ist, wie durch Pulverröntgendiffraktion mithilfe von Co-K$\alpha$-Strahlung erhalten.

2. Strontiumhexaferrit-Permanentmagnet nach Anspruch 1, ferner umfassend ausgeprägte Bragg-Reflexionen entlang der (*001*-) Reflexion, wie durch Pulverröntgendiffraktion, die mithilfe von Co-K$\alpha$-Strahlung erhalten wurde, bewiesen.

3. Strontiumhexaferrit-Permanentmagnet nach einem der Ansprüche 1 bis 2, **dadurch gekennzeichnet, dass** er ein Pulverröntgendiffraktionsmuster mit charakteristischen Spitzen umfasst, die in 2-Theta-Winkeln (°), für (*006*) bei $2\theta$ = 26,9° $\pm$ 0,2°, (*110*) bei $2\theta$ = 35,4° $\pm$ 0,2°, (*008*) bei $2\theta$ = 36,3° $\pm$ 0,2°, (*107*) bei $2\theta$ = 37,7° $\pm$ 0,2° und (*0014*) bei $2\theta$ = 65,8° $\pm$ 0,2°, wie mithilfe von Co-K$\alpha$-Strahlung erhalten, ausgedrückt sind.

4. Strontiumhexaferrit-Permanentmagnet nach einem der Ansprüche 1 bis 3, **dadurch gekennzeichnet, dass** er ein Hysterese-Rechteckigkeitsverhältnis ($M_r/M_s$) umfasst, das zwischen 0,65 und 1,0, wie zwischen 0,70 und 1,0, wie zwischen 0,75 und 1,0, wie zwischen 0,80 und 1,0, wie zwischen 0,85 und 1,0 und wie zwischen 0,95 und 1,0 ist.

5. Strontiumhexaferrit-Permanentmagnet nach einem der Ansprüche 1 bis 4, **dadurch gekennzeichnet, dass** er ein hysteretisches Rechteckigkeitsverhältnis ($M_r/M_s$) umfasst, das zwischen 0,85 und 1,0, wie zwischen 0,95 und 1,0 ist.

6. Verwendung eines Strontiumhexaferrit-Permanentmagneten nach einem der Ansprüche 1 bis 5 als magnetisches Bauteil in einer Vorrichtung.

**Revendications**

1. Aimant permanent en hexaferrite de strontium comprenant de l'hexaferrite de strontium hautement aligné, **caractérisé en ce que** ses réflexions de Bragg les plus intenses sont les réflexions (*006*), (*008*), (*107*) et (*0014*), et dans lequel le rapport d'intensité intégrée (*008*)/[(*110+008*)] est d'au moins 0,5, tel qu'obtenu par diffraction des rayons X sur poudre à l'aide d'un rayonnement Co-K$\alpha$.

2. Aimant permanent en hexaferrite de strontium selon la revendication 1, comprenant en outre des réflexions de Bragg prononcées le long de la réflexion (*001*), comme en témoigne la diffraction des rayons X sur poudre obtenue à l'aide du rayonnement Co-K$\alpha$.

3. Aimant permanent en hexaferrite de strontium selon l'une quelconque des revendications 1 à 2, **caractérisé en ce qu'**il comprend un diagramme de diffraction des rayons X sur poudre avec des pics caractéristiques exprimés en angle $2\theta$ (°) pour (*006*) à $2\theta$ = 26,9° $\pm$ 0,2°, (*110*) à $2\theta$ = 35,4° $\pm$ 0,2°, (*008*) à $2\theta$ = 36,3° $\pm$ 0,2°, (*107*) à $2\theta$ = 37,7° $\pm$ 0,2° et (*0014*) à $2\theta$ = 65,8° $\pm$ 0,2° tels qu'obtenus en utilisant le rayonnement Co-K$\alpha$.

4. Aimant permanent en hexaferrite de strontium selon l'une quelconque des revendications 1 à 3, **caractérisé en ce qu'**il comprend un rapport de carré d'hystérésis ($M_r/M_s$) qui est compris entre 0,65 et 1,0, par exemple entre 0,70 et 1,0, par exemple entre 0,75 et 1,0, par exemple entre 0,80 et 1,0, par exemple entre 0,85 et 1,0, par exemple entre 0,95 et 1,0.

5. Aimant permanent en hexaferrite de strontium selon l'une quelconque des revendications 1 à 4, **caractérisé en ce qu'**il comprend un rapport de carré d'hystérésis ($M_r/M_s$) qui est compris entre 0,85 et 1,0, par exemple entre 0,95 et 1,0.

6. Utilisation d'un aimant permanent en hexaferrite de strontium selon l'une quelconque des revendications 1 à 5 comme composant magnétique dans un dispositif.

Fig. 1

A)

B)

Fig. 2

Fig. 3

Fig. 4

Fig. 5

Fig. 6

Fig. 7

Fig. 8

Fig. 9

Fig. 10

Fig. 11

Fig. 12

C)

Fig. 12 (contd.)

Fig. 13

A)

B)

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0039773 A1

- US 2009196820 A1

**Non-patent literature cited in the description**

- **SAURA-MÚZQUIZ, M. et al.** Elucidating the relationship between nanoparticle morphology, nuclear/-magnetic texture and magnetic performance of sintered SrFe12O10 magnets. *Nanoscale*, 2020